# EUROPÄISCHE PATENTSCHRIFT

(11) **EP 2 163 770 B1**
(45) Veröffentlichungstag und Bekanntmachung des Hinweises auf die Patenterteilung: **06.11.2013**
(21) Anmeldenummer: 08015952.8
(22) Anmeldetag: 10.09.2008
(51) Int. Cl.: F15B 13/04

(54) **Interner Lastdruckabgriff für ein Mehrwege-Mehrstellungs-Schieberventil**
Internal load pressure sensing means for a directional control spool valve
Prise de pression de charge interne pour une soupape à tiroir à plusieurs positions et plusieurs voies

(43) Veröffentlichungstag der Anmeldung: 17.03.2010
(73) Patentinhaber: HAWE Hydraulik SE, 81673 München (DE)
(72) Erfinder: Macit, Recep, Dr., 81673 München (DE); Stönner, Christoph, 80639 München (DE)
(74) Vertreter: Grünecker, Kinkeldey, Stockmair & Schwanhäusser

(56) Entgegenhaltungen:
- DE-A1- 1 959 764
- US-A- 3 565 110

## Beschreibung

### Gebiet der Erfindung

Die vorliegende Erfindung betrifft ein Mehrwege-Mehrstellungs-Schieberventil, das in einem hydraulischen Steuerungssystem mit Druck- und Volumenstromanpassung an die momentanen Anforderungen eines oder mehrerer Verbraucher verwendet werden kann.

### Stand der Technik

Komplexe hydraulische Systeme, wie sie z.B. in Kränen, Baggern und Gabelstaplern verwendet werden, weisen oft einen Steuerkreis auf, über den der Lastdruck eines Verbrauchers abrufbar ist. Solche Steuerkreise werden z.B. für Regelaufgaben in den komplexen hydraulischen Systemen benötigt.

Die wichtigste und am weitesten verbreitetste Anwendung ist das sogenannte "Load-Sensing" (LS). Das Load-Sensing ist eine hydraulische Leistungsregelung, bei der sowohl der Druck als auch der Volumenstrom der Pumpe an die vom Verbraucher geforderten Bedingungen angepasst werden. Die Pumpe fördert dabei jeweils nur soviel Hydraulikflüssigkeit, um beim aktuell benötigten Fördervolumen den aktuell benötigten Förderdruck aufrechtzuerhalten.

Die Wirkungsweise ist am besten zu verstehen, wenn man zunächst von einer Kreislaufstruktur mit einer Druckquelle konstanten Drucksollwertes (Konstantpumpe) ausgeht. Die Verbraucherbewegung der Antriebe wird mit Hilfe von Stetigsteuerventilen beeinflusst. Damit Belastungsschwankungen nicht zu unzulässigen Durchflussschwankungen führen, werden die Antriebe volumenstrom- oder geschwindigkeitsgeregelt. Hauptnachteil ist, dass der Sollwert der Druckquelle auf den höchsten zu erwartenden Lastdruck zuzüglich eine für die Steuerventile notwendigen Druckdifferenz eingestellt sein muss. Ein gravierender Nachteil davon ist, dass bei kleinen Lastdrücken große Druckabfälle in den in den Steuerspalten der Ventile auftreten, die hohe Drosselverluste hervorrufen.

In einem LS-System wird die Druckquelle dahingehend modifiziert, dass der Drucksollwert zunächst auf einen niedrigen Wert eingestellt wird, der zur Überwindung einer Druckdifferenz in den Steuer- und Regelventilen erforderlich ist. Zusätzlich wird ein Signal gewonnen, das den Belastungszustand der aktiven Antriebe repräsentiert. Mit dessen Hilfe wird der Drucksollwert einer Vertellpumpe auf den aktuell erforderlichen Wert angehoben. Dazu müssen die Lastdrücke der Antriebe abgegriffen werden und einer verstellbaren Pumpe (Verstellpumpe) zugeführt werden. Bei mehreren hydraulischen Verbrauchern (Antrieben) wird der höchste im System auftretende Druck auf den LS-Regler der Pumpe zurückgeführt und mit dem Systemdruck, d.h. dem Druck, den die Pumpe liefert, verglichen. Der Systemdruck wird so geregelt, dass die Druckdifferenz zwischen dem Systemdruck und dem Druck am Verbraucher, der sich aus der Belastung ergibt, Drosselverluste im System kompensiert. Dem Verbraucher wird gerade so viel Druck zur Verfügung gestellt, wie nötig ist, um den hydraulischen Antrieb zu verstellen.

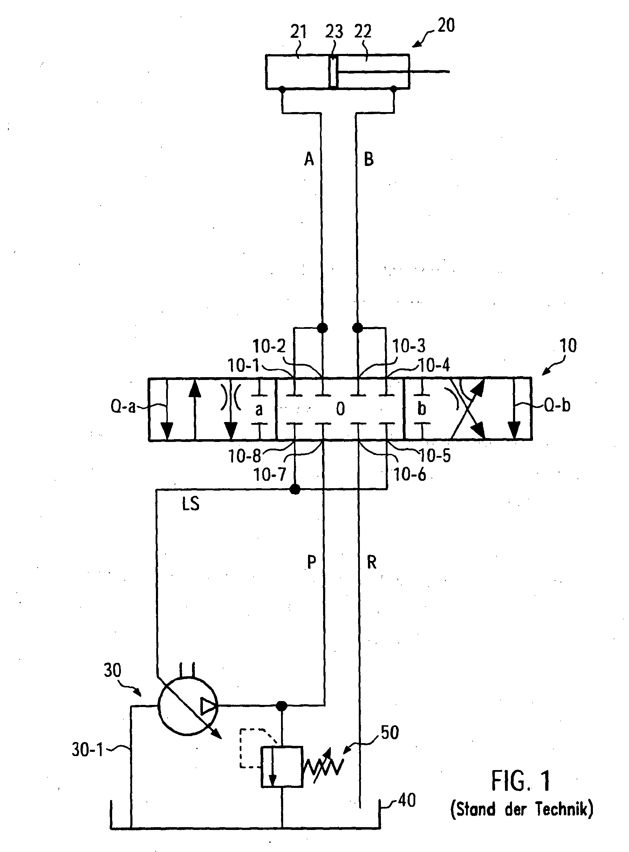

Fig. 1 zeigt ein Beispiel eines solchen Load-Sensing-Systems, das auch als Lastdruck-Meldesystem bezeichnet wird. In Fig. 1 bezeichnet das Bezugszeichen 20 einen hydraulischen Stellantrieb, das Bezugszeichen 30 eine verstellbare Pumpe und das Bezugszeichen 10 ein Mehrwege-Mehrstellungs-Schieberventil. Die Verstellpumpe 30 saugt über eine Ansaugleitung 30-1 hydraulische Flüssigkeit aus einem Reservoir 40 und pumpt sie in eine Druckleitung P. Die Druckleitung P ist an dem Anschluss 10-7 des Mehrwege-Mehrstellungs-Schieberventils 10 angeschlossen. Am Anschluss 10-6 des Mehrwege-Mehrstellungs-Schieberventils 10 ist die Rückleitung R angeschlossen, durch die die hydraulische Flüssigkeit in das Reservoir 40 zurückgeleitet wird. An den Anschlüssen 10-5 und 10-8 ist die Steuerleitung des Lastdruckkreises LS angeschlossen, über die der Lastdruck an die Verstellpumpe 30 weitergeleitet wird. Der hydraulische Stellantrieb 20 in Fig. 1 ist ein doppelt wirkender Zylinder, bei dem ein Kolben 23, der in dem Zylinder 20 läuft, das Zylinderinnere in zwei Druckräume 21 und 22 aufteilt. Bei einer Druckdifferenz zwischen den Druckräumen 21 und 22 bewegt sich der Kolben 23. An den Druckräumen 21 und 22 des Zylinders 20 sind die Arbeitsleitungen A bzw. B angeschlossen. Die anderen Enden der Arbeitsleitungen A und B sind mit den Anschlüssen 10-2 bzw. 10-3 des Mehrwege-Mehrstellungs-Schieberventils 10 verbunden. Das Mehrwege-Mehrstellungs-Schieberventil 10 weist drei Stellungen auf, eine Nullstellung 0, und zwei Arbeitsstellungen a und b. In Fig. 1 sind in Nullstellung 0 alle Anschlüsse gesperrt. In der Arbeitsstellung a ist die Druckleitung P mit der Arbeitsleitung A verbunden. Der Rücklauf R ist mit der Arbeitsleitung B verbunden. In der Arbeitsstellung a verschiebt sich der Kolben 23 des Zylinders 20 in der Zeichenebene nach rechts. Im Druckraum 21 des Zylinders 20 steigt der Druck und hydraulische Flüssigkeit wird in den Druckraum 21 eingespeist. Hydraulische Flüssigkeit aus dem Druckraum 22 des Zylinders 20 wird über die Rücklaufleitung R in das Reservoir 40 abgelassen. In der Arbeitsstellung b ist die Druckleitung P mit der Arbeitsleitung B verbunden. Entsprechend ist die Arbeitsleitung A mit der Rücklaufleitung R verbunden. In diesem Fall bewegt sich der Kolben 23 in dem Zylinder 20 in der gewählten Darstellung von Fig. 1 in entgegengesetzter Richtung nach links. Die Anschlüsse 10-1 und 10-4 des Mehrwege-Mehrstellungs-Schieberventils 10 sind mit den Arbeitsleitungen A und B verbunden. In der Arbeitsstellung a wird damit auf den Lastdruckkreis LS der Druck der Arbeitsleitung A über den Querkanal Q-a gelegt. In der Arbeitsstellung b wird auf den Lastdruckkreis LS der Druck der Arbeitsleitung B über den Querkanal Q-b gelegt. In der Nullstellung 0 gibt es keine Verbindung zwischen der Verstellpumpe 30 (Druckleitung P und Lastdruckkreis LS) bzw. dem Rücklauf R auf der einen Seite und den Arbeitsleitungen A und B auf der anderen Seite des Mehrwege-Mehrstellungs-Schieberventils 10. Die Rücklaufkanäle in den Ventilstellungen a und b sind in der Darstellung von Fig. 1 mit einer Drosselfunktion ausgestattet, um einen stabileren Betrieb zu gewährleisten. Die Querkanäle Q-a und Q-b sind als Schieberbohrungen in dem Ventil 10 realisiert, die den Lastdruck in der jeweiligen Arbeitsstellung a oder b zur gegenüberliegenden Schieberbohrungsseite übertragen.

Das Mehrwege-Mehrstellungs-Schieberventil 10 der Fig. 1 ist zur Veranschaulichung in der Zeichnung als 8-Wege-3-Stellungsventil (8/3-Wege Ventil) dargestellt. Das heißt, der jeweilige Lastdruck wird hier direkt von der Arbeitsleitung A oder B abgegriffen und getrennten Anschlüssen am Ventil 10 zugeführt.

In einer alternativen Bauformen eines solchen Mehrwege-Mehrstellungs-Schieberventils 10 wird der jeweilige Lastdruck im Gehäuse des Schieberventils 10 abgegriffen und im Gehäuse über Strömungswege zur Schieberbohrung Q-a bzw. Q-b geleitet. Der Schieber enthält für die Arbeitsstellungen a und b die Querkanäle Q-a und Q-b, die den Lastdruck in der jeweiligen Arbeitsstellung a oder b zur gegenüberliegenden Schieberbohrungsseite übertragen, wo im Gehäuse Strömungswege zu den Anschlüssen 10-8 und 10-5 führen. Die Anschlüsse 10-8 und 10-5 können auch in dem Ventilgehäuse durch Strömungskanäle zusammengeführt und mit einem einzelnen Lastdruckanschluss (LS-Anschluss) am Ventil 10 verbunden sein.

In diesem Fall wird das Mehrwege-Mehrstellungs-Schieberventil 10 als 4-Wege-3-Stellungsventil (4/3-Wege Ventil) mit zusätzlichem Lastdruckabgriff realisiert. (In einer geläufigen Notation wird der Lastdruckanschluss separat aufgeführt. Das heißt, nur die Arbeitsanschlüsse P, R, A und B zählen bei der Bezeichnung 4/3 Wege Ventil)

In Fig. 1 wird weiterhin ein Druckregelventil 50 am Ausgang der Verstellpumpe 30 gezeigt, durch die der Druck auf der Druckleitung P konstant gehalten werden kann.

In der Nullstellung 0 des Mehrwege-Mehrstellungs-Schieberventils 10 wird die Verstellpumpe 30 in einen Ruhezustand versetzt, in dem die Pumpe kein Öl fördert und nur einen geringen Druck aufbaut entsprechend des geringen Druckes im Lastdruckkreis LS.

Wird das Mehrwege-Mehrstellungs-Schiebeventil 10 in die Arbeitsstellung a beschaltet, wird die Druckleitung P mit der Arbeitsleitung A verbunden. Durch die Verbindung der Anschlüsse 10-1 und 10-8 wird der Restdruck auf der Druckleitung P an den Steuereingang Verstellpumpe 30 weitergeleitet, wodurch die Verstellpumpe 30 solange hochgefahren wird, bis der Druck ausreicht, den Kolben 23 im Zylinder 20 nach rechts zu verschieben.

In Arbeitsstellung b wird die Druckleitung P auf die Arbeitsleitung B gelegt und der Druck der Arbeitsleitung B wird über den Lastdruckkreis LS an die Verstellpumpe 30 weitergeleitet. Durch die Regelung wird die Pumpleistung der Verstellpumpe 30 solange verändert, bis sich der Kolben 23 in dem Zylinder 20 in der Fig. 1 nach links bewegt.

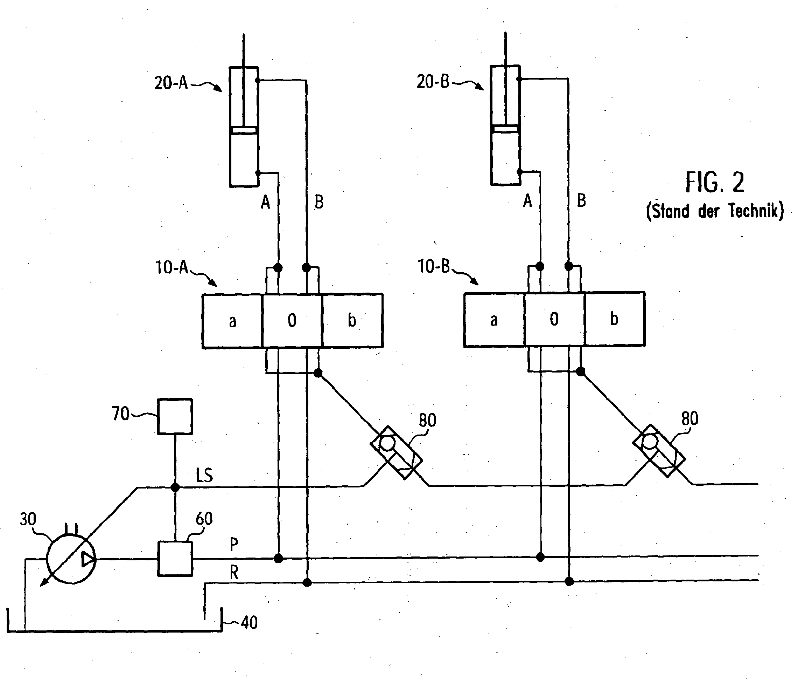

Das Load-Sensing-System, das in Fig. 1 gezeigt ist, lässt sich auf eine Vielzahl von hydraulischen Verbrauchern, wie es in komplexen hydraulischen Systemen üblich ist, erweitern. Eine typische Konfiguration wird in Fig. 2 gezeigt. Fig. 2 zeigt mehrere hydraulische Verbraucher (hydraulische Antriebe) 20-A und 20-B, die über mehrere Mehrwege-Mehrstellungs-Schieberventile 10-A und 10-B mit der Verstellpumpe 30 verbunden sind. Der Lastdruckabgriff am Mehrwege-Mehrstellungs-Schieberventil 10-A und der Lastdruckabgriff an dem Mehrwege-Mehrstellungs-Schieberventil 10-B sind über Wechselventile 80 mit dem Lastdruckkreis LS verbunden. Das Wechselventil 80 sperrt den Eingang mit dem niedrigeren anliegenden Druck und schaltet den Eingang mit dem höheren Druck auf den Ausgang durch. Durch die Wechselventile 80 wird der jeweils höhere Lastdruck an dem Verbraucher 20-A oder 20-B auf den Lastdruckkreis LS gelegt. Der Druck in dem Lastdruckkreis LS kann dann verwendet werden, die Verstellpumpe 30 zu regeln, ein Druckregelventil 60 am Ausgang der Pumpe 30 zu kontrollieren, oder andere elektromechanische Vorrichtungen 70, wie z.B. Druckschalter oder Drucksensoren, anzusteuern, die dann Signale für übergeordnete Elektronik bereitstellen.

Beim Lastdruckabgriff ist darauf zu achten, dass der Arbeitskreis nicht belastet wird, d.h. dass kein Druckabfall oder nur ein vernachlässigbarer Druckabfall stattfindet. Dadurch wird verhindert, dass der Arbeitskreis über den Lastdruckkreis leerläuft.

Im Stand der Technik, wie er in Fig. 1 und 2 gezeigt ist, wird dies durch die Anzapfung der Arbeitsleitungen A und B realisiert, wobei ein entsprechendes Ventil verwendet werden muss, das immer die Anzapfung an der aktiven Arbeitsleitung auswählt, d.h. die Arbeitsleitung, die unter Druck steht. Die Realisierung eines Lastdruckkreises erfordert deshalb ein entweder ein Mehrwegeventil mit internen, im Inneren des Ventilgehäuses unter gebrachten, oder mit externen Strömungswegen für den Lastdruckabgriff. Beim Mehrwegeventil mit externen Strömungswegen werden eine entsprechende Anzahl von Anschlüssen, Abzweigungen von den Arbeitsleitungen und die entsprechenden Verbindungsleitungen zwischen den Abzweigungen und den Ventilanschlüssen benötigt. Ein Mehrwegeventil mit internen Strömungswegen erfordert ein kompliziertes Ventilgehäuse mit integrierten Strömungswegen.

Es ist deshalb eine Aufgabe der vorliegenden Erfindung, die Bereitstellung eines Lastdruckkreises in einem hydraulischen System mit geringerem Aufwand zu realisieren, wobei weniger und einfachere hydraulische Komponenten verwendet werden können, wodurch sich auch die Montage und Wartung des Systems vereinfacht und die Betriebssicherheit verbessert wird.

Ein Mehrwege-Mehrstellungsventil gemäß dem einleitenden Teil des Anspruches 1 wird in der Offenlegungsschrift DE 1959764 offenbart.

### Zusammenfassung der Erfindung

Die Aufgabe wird gelöst durch ein Mehrwege-Mehrstellungs-Schieberventil gemäß dem Anspruch 1, das einen internen Lastdruckabgriff aufweist, der den Lastdruck von einem Arbeitsströmungsweg abgreift, wobei der Lastdruckabgriff in einer Schiebereinrichtung des Mehrwege-Mehrstellungs-Schieberventils integriert und mit einem Lastdruckkreis verbindbar ist.

Durch die Integration des internen Lastdruckabgriffes in eine Schiebereinrichtung eines Mehrwege-Mehrstellungs-Schieberventiles kann die gleiche Funktion des Fig. 1 und 2 gezeigten 8/3-Wegeventils mit einem 6/3-Wegeventil realisiert werden und die entsprechenden Abzweigungen von den Verbindungen zu dem Ventil sind nicht notwendig.

Im Vergleich zu dem Stand der Technik entsprechend der üblichen Bezeichnung der in den Fig. 1 und 2 gezeigten Ventile mit einem 4/3 Wege Ventil mit im Gehäuse integriertem Druckabgriff benötigt das Mehrwege-Mehrstellungs-Schieberventil gemäß der vorliegenden Erfindung ein weitaus einfacheres Ventilgehäuse mit weniger Bearbeitungsschritten bei der Herstellung, da kein komplizierten Strömungswege im Ventilgehäuse realisiert werden müssen.

Weiterhin können Standart 4/3 Wege Ventile verwendet werden, bei denen das Gehäuse und der Schiebereinrichtung (Kolben) mit relativ einfachen Mitteln nachbearbeitet und modifiziert wird.

Dadurch reduziert sich die Anzahl der Bauteile, die Bauteilkomplexität und der Montageaufwand.

In einer Ausführungsform der vorliegenden Erfindung ist die Schiebereinrichtung in einem Gehäuse beweglich untergebracht, wobei das Gehäuse jeweils einen einzelnen Strömungsweg für einen Lastdruckkreiszulauf und einen einzelnen Strömungsweg für einen Lastdruckkreisablauf aufweist, die für jede Stellung des Mehrwege-Mehrstellungs-Schieberventils verwendet werden können. Dadurch wird die Anzahl von Bohrungen für die Lastdruckströmungswege auf zwei reduziert. Weiterhin sind keine komplizierten Strömungswege im Gehäuse nötig.

In einer weiteren Ausführungsform der vorliegenden Erfindung verbindet die Schiebereinrichtung in einer ersten Stellung den einzelnen Strömungsweg für den Lastdruckkreiszulauf im Gehäuse und den einzelnen Strömungsweg für den Lastdruckkreisablauf im Gehäuse über ein Rückschlagventil miteinander, wobei die Schiebereinrichtung den Lastdruckabgriff aufweist, um den Lastdruck von einem Arbeitsströmungsweg abzugreifen, und wobei das Rückschlagventil in Richtung des Lastdruckkreiszulaufes sperrt. Durch die Integration des Rückschlagventils in einer Steuerstellung des Mehrwege-Mehrstellungs-Schieberventils ist es möglich, eine Vielzahl von hydraulischen Verbrauchern an einen Lastdruckkreis anzuschließen, ohne dass zusätzliche Wechselventile, wie in Fig. 2 dargestellt, notwendig sind. Im Lastdruckkreis ist immer der höchste Druck der von irgendeinem Verbraucher benötigt wird, abgreifbar.

In einer anderen Ausführungsform verbindet die Schiebereinrichtung in einer zweiten Stellung den vorher genannten einzelnen Strömungsweg für den Lastdruckkreiszulauf im Gehäuse und den vorher genannten einzelnen Strömungsweg für den Lastdruckkreisablauf im Gehäuse miteinander, wodurch der Lastdruckkreis entlastet werden kann. Dadurch wird eine Rücksetzung der Pumpe in einen Ruhezustand ermöglicht.

In einer weiteren Ausführungsform ist das Mehrwege-Mehrstellungs-Schieberventil ein Kolbenventil mit einem Kolben als Steuerelement, der längsbetätigt wird, wobei der Lastdruckabgriff in dem Kolben als Längskanal in dem Kolben ausgebildet ist. Durch die Verwendung von Kolbenventilen können modifizierte Standardventile als Mehrwege-Mehrstellungs-Schieberventile gemäß der vorliegenden Erfindung verwendet werden, wodurch Herstellungskosten gesenkt werden können. Weiterhin lässt sich durch die Ausbildung des Lastdruckabgriffs als Längskanal sogar nachträglich ein Standard-Mehrwege-Mehrstellungs-Schieberventil so modifizieren, dass ein interner Lastdruckabgriff von einem Arbeitsströmungsweg realisiert werden kann. Dies ist eine extrem kostengünstige Realisierung eines Mehrwege-Mehrstellungs-Schieberventils, das einen Lastdruckabgriff zur Verfügung stellt.

In einer Ausführungsform wird der Längskanal im Inneren des Steuerkolbens realisiert, so dass er in etwa axial, zwischen einem quer über oder durch den Kolben verlaufenden Arbeitsströmungsweg und einem quer über oder durch den Kolben verlaufenden Lastdruckströmungsweg verläuft, vorzugsweise als vom Steuerkolben-Ende eingebrachte die Strömungswege schneidende und nachträglich mit einem Verschluss versehene Bohrung. Wird der Längskanal als zentrale Bohrung ausgeführt, kann der Lastdruckabgriff von den Arbeitsströmungswegen durch eine einzelne zentrale, axiale und quer durch den Kolben verlaufende Bohrung realisiert werden, die auch nachträglich eingebracht werden kann um z. B. ein Standartventil zu modifizieren. Wird alternativ dazu der Längskanal als quer über den Kolben verlaufender Strömungsweg realisiert, kann der Längskanal durch Fräsen der Oberfläche des Kolbens realisiert werden. Je nach Bauart eines Standartventils kann die zentrale Bohrung oder die Oberfräsung einfacher zu realisieren sein.

In einer weiteren Ausführungsform ist der Längskanal so eng ausgebildet, dass er als Drossel wirkt und/oder dass in den Längskanal eine Drossel eingesetzt ist. Dadurch wird verhindert, dass hydraulische Flüssigkeit schnell aus dem Arbeitskreislauf über den Lastdruckkreis entweichen kann.

In einer Ausführungsform der vorliegenden Erfindung weist das Mehrwege-Mehrstellungs-Schieberventil drei Stellungen und fünf Fluidanschlüsse auf. Ein solches 5/3-Wegeventil, bzw. in der konventionellen Bezeichnung ein 3/3 Wegeventil mit zusätzlichen Lastdruckanschlüssen, kann einen einfach wirkenden Zylinder ansteuern, d.h. einen Zylinder, bei dem nur eine Druckkammer mit hydraulischer Flüssigkeit gefüllt wird und der z.B. als Hubzylinder in einem Gabelstapler verwendet werden kann.

In einer besonderen Ausführungsform davon weist das Mehrwege-Mehrstellungs-Schieberventil eine Nullstellung und zwei Steuerstellungen auf. In der Nullstellung ist der zweite, dritte und vierte Anschluss gesperrt und der erste und fünfte Anschluss sind über einen ersten Strömungsweg im Kolben fluidisch miteinander verbunden, wodurch der Lastdruckkreis entlastet werden kann. In einer ersten Steuerstellung des Ventils ist der dritte Anschluss gesperrt, der zweite und vierte Anschluss sind über einen zweiten Strömungsweg im Kolben fluidisch miteinander verbunden, wobei der zweite Strömungsweg im Kolben den Lastdruckabgriff aufweist , Der erste und fünfte Anschluss sind über ein erstes Rückschlagventil fluidisch so verbunden, dass das erste Rückschlagventil in Richtung des fünften Anschlusses sperrt, wobei der Lastdruckabgriff den Lastdruck an den ersten Anschluss weiterleitet. In einer zweiten Steuerstellung des Ventils ist der zweite Anschluss gesperrt und der dritte und vierte Anschluss sind über einen dritten Strömungsweg fluidisch miteinander verbunden. Der erste und fünfte Anschluss sind über ein zweites Rückschlagventil fluidisch so verbunden, dass das zweite Rückschlagventil in Richtung des fünften Anschlusses sperrt.

Durch diese Ventilkonfiguration können folgende Funktionen auf einfachstmögliche Weise hergestellt werden:
i) Heben und Senken eines einfach wirkenden Zylinders,
ii) Lastdruckabgriff in einer Hebestellung für den einfach wirkenden Zylinder,
iii) Lastdruckanschluss von weiteren hydraulischen Verbrauchern,
iv) Entlastungsfunktion für den Lastdruckkreis.

In einer anderen Ausführungsform weist das Mehrwege-Mehrstellungs-Schieberventil drei Stellungen und sechs Fluidanschlüsse auf. Durch ein solches 6/3-Wegeventil, bzw. in der konventionellen Bezeichnung ein 4/3 Wegeventil mit zusätzlichen Lastdruckanschlüssen, kann ein zweifach wirkender Zylinder angesteuert werden, wie er z.B. für eine Kippfunktion in einem Gabelstapler benötigt wird, wobei das Drucksignal von dem jeweils aktivem Lastkreis auf den Lastdruckkreis geschaltet wird.

In einer besonderen Ausführungsform davon weist das Mehrwege-Mehrstellungs-Schieberventil eine Nullstellung und zwei Steuerstellungen auf. In der Nullstellung des Ventils ist der zweite, dritte, vierte und fünfte Anschluss gesperrt und der erste und sechste Anschluss sind über einen ersten Strömungsweg im Kolben fluidisch miteinander verbunden, wodurch der Lastdruckkreis entlastet werden kann. In einer ersten Steuerstellung des Ventils sind der dritte und fünfte Anschluss über einen zweiten Strömungsweg im Kolben fluidisch verbunden. Weiterhin sind der zweite und vierte Anschluss über einen dritten Strömungsweg im Kolben fluidisch miteinander verbunden, wobei der dritte Strömungsweg im Kolben den Lastdruckabgriff aufweist. Der erste und sechste Anschluss sind über ein erstes Rückschlagventil fluidisch so verbunden, dass das Rückschlagventil in Richtung des sechsten Anschlusses sperrt, wobei der Lastdruckabgriff den Lastdruck an den ersten Anschluss weiterleitet. In einer zweiten Steuerstellung des Ventils sind der dritte und vierte Anschluss über einen vierten Strömungsweg im Kolben fluidisch miteinander verbunden. Der zweite und fünfte Anschluss sind über einen fünften Strömungsweg im Kolben fluidisch miteinander verbunden, wobei der fünfte Strömungsweg im Kolben den Lastdruckabgriff aufweist. Der erste und sechste Anschluss sind über ein zweites Rückschlagventil fluidisch so miteinander verbunden, dass das zweite Rückschlagventil in Richtung des sechsten Anschlusses sperrt, wobei der Lastdruckabgriff den Lastruck an den ersten Anschluss weiterleitet.

Durch diese Ventilkonfiguration können folgende Funktionen besonders einfach bereitgestellt werden:
i) Bewegen des doppelt wirkenden Zylinders in zwei Richtungen,
ii) Aufschalten des Lastdruckes des aktiven Arbeitskreises auf den Lastdruckkreis,
iii) Anschlussmöglichkeit von weiteren Lastdruckabgriffen anderer hydraulischer Verbraucher, und
iv) Entlastungsfunktion für den Lastdruckkreis.

Die oben dargestellten Ausführungsformen können vorteilhaft beliebig kombiniert werden.

### Kurze Beschreibung der Zeichnungen

Weitere Vorteile, Aufgaben und Ausführungsformen der vorliegenden Erfindung werden mit der folgenden ausführlichen Beschreibung offensichtlicher, wenn sie mit Bezug auf die begleitenden Zeichnungen gelesen wird, bei denen:
- Fig. 1: eine Skizze eines vereinfachten Load-Sensing-Systems gemäß des Stan-des der Technik zeigt;
- Fig. 2: eine vereinfachte Darstellung eines Load-Sensing-Systems mit mehreren hydraulischen Verbrauchern gemäß des Standes der Technik zeigt;
- Fig. 3: eine Darstellung eines hydraulischen Systems für mehrere hydraulische Verbraucher mit zwei Mehrwege-Mehrstellungs-Schieberventilen mit inter-nem Lastdruckabgriff gemäß der vorliegenden Erfindung für ein Load-Sensing-System zeigt;
- Fig. 4: einen Querschnitt durch ein Mehrwege-Mehrstellungs-Schieberventil ge-mäß der vorliegenden Erfindung zeigt;
- Fig. 5: eine perspektivische Ansicht eines Kolbens gemäß der vorliegenden Erfin-dung zeigt; und
- Fig. 6: eine Schnittzeichnung eines Kolbens gemäß der Fig. 5 in einem Kolben-ventil für drei verschiedene Stellungen zeigt.

### Ausführliche Beschreibung der Erfindung

Obwohl die vorliegende Erfindung in Bezug auf Ausführungsformen, wie sie in der folgenden ausführlichen Beschreibung veranschaulicht werden, beschrieben wird, ist die ausführliche Beschreibung nicht dazu gedacht, die vorliegende Erfindung auf die besonderen Ausführungsformen, die darin offenbart sind, einzuschränken, sondern die beschriebenen Ausführungsformen sollen nur die verschiedenen Aspekte der vorliegenden Erfindung beispielhaft veranschaulichen, deren Umfang durch die beiliegenden Ansprüche definiert wird.

Die vorliegende Erfindung betrifft allgemein hydraulische Systeme mit einem Lastdruckkreis. Insbesondere betrifft die vorliegende Erfindung ein Mehrwege-Mehrstellungs-Schieberventil, das einen internen Lastdruckabgriff bereitstellt, der in einer Schiebereinrichtung des Mehrwege-Mehrstellungs-Schieberventils integriert ist.

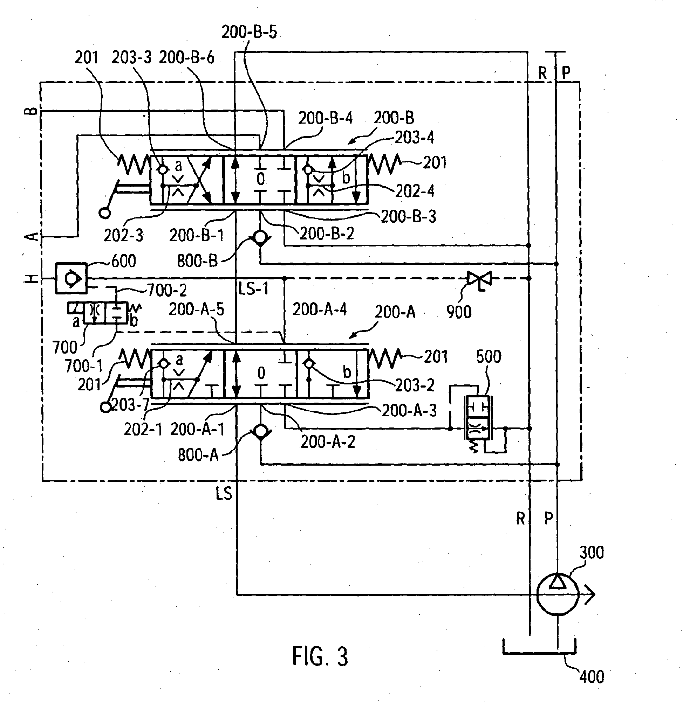

Beispielhaft wird in Fig. 3 ein hydraulisches System mit einem Lastdruckkreis LS gemäß der vorliegenden Erfindung veranschaulicht, das für den Anschluss von zwei hydraulischen Antrieben über die Mehrwege-Mehrstellungs-Schieberventile 200-A und 200-B geeignet ist. Fig. 3 zeigt eine Verstellpumpe 300, die hydraulische Flüssigkeit aus einem Reservoir 400 in eine Druckleitung P pumpt. Die Verstellpumpe 300 wird über den Lastdruckkreis LS gemäß des erforderlichen Druckes für einen bestimmten Verbraucher eingestellt. Über die Rücklaufleitungen R läuft hydraulische Flüssigkeit zurück in das Reservoir 400. Das Mehrwege-Mehrstellungs-Schieberventil 200-A ist dafür ausgelegt, einen einfach wirkenden Zylinder (nicht gezeigt) über die Hubleitung H (Arbeitsleitung) anzusteuern.

Das Mehrwege-Mehrstellungs-Schieberventil 200-B ist dafür ausgelegt, einen doppelt wirkenden Zylinder (nicht gezeigt) über die Arbeitungsleitungen A und B anzusteuern. Jedes der beiden Mehrwege-Mehrstellungs-Schieberventile 200-A und 200-B ist mit einem Anschluss an die Druckleitung P und mit einem anderen Anschluss an die Rücklaufleitung R angeschlossen, so dass die beiden Mehrwege-Mehrstellungs-Schieberventile 200-A und 200-B und die daran angeschlossen hydraulischen Verbraucher parallel betrieben werden können.

Weiterhin sind die beiden Mehrwege-Mehrstellungs-Schieberventile 200-A und 200-B in Bezug auf den Lastdruckkreis LS in Reihe geschaltet. Das heißt, die Lastdruckleitung, die von dem Mehrwege-Mehrstellungs-Schieberventil 200-B ausgeht, ist über die Verbindungsleitung LS-1 mit dem Mehrwege-Mehrstellungs-Schieberventil 200-A verbunden und wird auf den Lastdruckkreis LS weiterverbunden, der wiederum mit dem Steuereingang der Verstellpumpe 300 verbunden ist. Zur Entlastung des Lastdruckkreises LS wird der Lastdruckkreis über die Ventile 200-A und 200-B mit der Rücklaufleitung R verbunden, wenn sich die Mehrwege-Mehrstellungs-Schieberventile 200-A und 200-B in Nullstellung befinden.

Das Mehrwege-Mehrstellungs-Schieberventil 200-A, das zur Ansteuerung des einfach wirkenden Zylinders über die Hubleitung H verwendbar ist, ist ein Fünfwege-Dreistellungs-(5/3)-Schieberventil, bzw. in der konventionellen Bezeichnung ein 3/3 Wegeventil mit zusätzlichen Lastdruckanschlüssen. In einer Nullstellung 0 des Ventils ist der zweite Anschluss 200-A-2, der dritte Anschluss 200-A-3 und der vierte Anschluss 200-A-4 gesperrt und der erste Anschluss 200-A-1 und der fünfte Anschluss 200-A-5 sind fluidisch miteinander verbunden, so dass in der Nullstellung 0 der Lastdruckkreis LS mit der Rücklaufleitung R verbunden werden kann. Der dritte Anschluss 200-A-3 ist mit der Druckleitung P über ein Rückschlagventil 800-A verbunden, das in Richtung Ventil 200-A die Durchlassrichtung hat. Der Anschluss 200-A-3 ist mit der Rücklaufleitung R über ein Senkbremsventil 500 verbunden. Der Anschluss 200-A-4 ist über das Rückschlagventil 600 mit der Hubleitung H verbunden.

Das Rückschlagventil 600 stellt sicher, dass die Hubleitung H in Ruhestellung des Ventiles 200-A leckagefrei abgesperrt ist. Das heißt, in einer Nullstellung des Mehrwege-Mehrstellungs-Schieberventils 200-A verhindert das Rückschlagventil 600, dass sich der Kolben eines Hubzylinders aufgrund des Eigengewichts und der Leckageverluste selbstständig senkt. Das Rückschlagventil 600 in Fig. 3 ist ein hydraulisch entsperrbares Rückschlagventil. Dazu ist ein Steuereingang des entsperrbaren Rückschlagventils 600 über eine Steuerleitung 700-2 mit einem (z.B. elektrisch betätigbaren) 2/2-Wegeventil verbunden. Der zweite Anschluss des 2/2-Wegeventils 700 ist mit dem Anschluss 200-A-4 des Mehrwege-Mehrstellungs-Schieberventils 200-A über die Leitung 700-1 verbunden. In einer durch eine Feder gehaltene Ruhestellung b des 2/2-Wegeventils 700 sind die Leitungen 700-2 und 700-1 getrennt. Bei Betätigung des 2/2-Wegeventils 700 schaltet das Ventil in den Zustand a und die Leitungen 700-1 und 700-2 sind gedrosselt miteinander verbunden, so dass an dem Steuereingang des entsperrbaren Rückschlagventils 600 der Druck an dem Anschluss 200-A-4 des Ventils 200-A anliegt.

Durch die Betätigung des 2/2-Wegeventils 700 kann eine weitere Sicherheitsfunktion realisiert werden. Z.B. kann das 2/2-Wegeventil 700 durch einen Schalter z.B. im Fahrersitz des hydraulischen Systems (z.B. eines Gabelstaplers) betätigt werden. Dadurch kann sichergestellt werden, dass hydraulische Funktionen nur bei Anwesenheit eines Operators möglich sind. Die Realisierung der Sicherheitsfunktionen durch das Rückschlagventil 600 und das 2/2 Wegeventil 700, wie sie in Figur 3 gezeigt sind, stellen nur ein Beispiel für die Realisierung solcher Sicherheitsfunktionen dar. Art und Umfang der Sicherheitsfunktionen werden neben den technischen Gegebenheiten eines bestimmten Systems auch durch gesetzliche Regelungen vorgegeben. Das Beispiel in Figur 3 soll darauf nur beispielhaft hinweisen. Wichtig ist jedoch, dass die Grundfunktionen des Systems, nämlich die Betätigung der hydraulischen Verbraucher (Antriebe) auch ohne die Elemente 600, 700, 700-1 und 700-2 gewährleistet ist.

Weiterhin kann über ein Absperrventil 900 der Arbeitskreis in die Rücklaufleitung R entlastet/belüftet werden.

Das 5/3-Wegeventil 200-A (bzw. in der konventionellen Bezeichnung das 3/3 Wegeventil mit zusätzlichen Lastdruckanschlüssen) weist eine Ruhestellung 0, die durch zwei Federn 201 gehalten wird, und zwei Steuerstellungen a und b, die durch manuelle, elektrische oder pneumatische Betätigung einstellbar sind, auf (Fig. 3 zeigt ein manuell betätigbares Ventil 200-A).

In der Ruhestellung 0 sind die Anschlüsse 200-A-2, 200-A-3 und 200-A-4 unterbrochen und die Anschlüsse 200-A-1 und 200-A-5 sind miteinander verbunden. Im Ruhezustand existiert keine Verbindung zwischen der Druckleitung P oder der Rücklaufleitung R mit dem Arbeitskreis (Hubleitung H). Der Lastdruckkreis LS wird durchgeschleift und kann über die Rückleitung R entlastet werden.

In einer ersten Steuerstellung a des Ventils 200-A ist der Anschluss 200-A-3 gesperrt, die Anschlüsse 200-A-2 und 200-A-4 sind fluidisch miteinander verbunden und die Anschlüsse 200-A-1 und 200-A-5 sind über ein erstes Rückschlagventil 203-1, das in Richtung des Anschlusses 200-A-1 öffnet, verbunden. Die Verbindung zwischen den Anschlüssen 200-A-2 und 200-A-4 weist den Lastdruckabgriff 202-1 auf, der mit dem Anschluss 200-A-1 gedrosselt verbunden ist, so dass auf dem Lastdruckkreis LS der Druck an der Arbeitsleitung mit den Anschlüssen 200-A-2 und 200-A-4 anliegt. Der Lastdruckkreis LS ist durch das Rückschlagventil 203-1 in Entlastungsrichtung (zum Anschluss 200-A-5 hin) abgesperrt. Durch das Rückschlagventil 203-1 wir außerdem gewährleistet, dass der Lastdruckabgriff eines weiteren Verbrauchers angeschlossen und an den Lastdruckkreis LS weitergeleitet werden kann. In der Arbeitsstellung a ist die Druckleitung P mit der Hubleitung H verbunden.

In der zweiten Steuerstellung b des Ventils 200-A ist der Anschluss 200-A-2 gesperrt und die Anschlüsse 200-A-3 und 200-A-4 sind fluidisch miteinander verbunden. Die Anschlüsse 200-A-1 und 200-A-5 sind mit einem zweiten Rückschlagventil 203-2 fluidisch miteinander so verbunden, dass das zweite Rückschlagventil 203-2 in Richtung des Anschlusses 200-A-1 öffnet. In der zweiten Steuerstellung b ist die Hubleitung H mit der Rücklaufleitung R über die Senkbremse 500 verbunden. Der Lastdruckkreis LS ist durch das Rückschlagventil 203-2 in Entlastungsrichtung abgesperrt. Durch das Rückschlagventil 203-2 wir außerdem gewährleistet, dass der Lastdruckabgriff eines weiteren Verbrauchers angeschlossen und an den Lastdruckkreis LS weitergeleitet werden kann.

Wird das 5/3-Wegeventil 200-A (bzw. in der konventionellen Bezeichnung ein 3/3 Wegeventil mit zusätzlichen Lastdruckanschlüssen) in Stellung a gebracht, und das 2/2-Wegeventil 700 aktiviert, ist der einfach wirkende Zylinder (nicht gezeigt), der an der Arbeitsleitung H angeschlossen ist, mit der Druckleitung P verbunden, so dass sich eine Druckkammer des einfach wirkenden hydraulischen Zylinders mit hydraulischem Medium füllt. Der dadurch entstehende Druckabfall in der Arbeitsleitung wird in dem Ventil 200-A über den Druckabgriff 202-1 an den Lastdruckkreis LS übertragen und an den Steuereingang der Verstellpumpe 300 weitergeleitet. Der Druckabfall durch die Bewegung des einfach wirkenden Zylinders (nicht gezeigt) führt zu einer Erhöhung der Pumpleistung der Verstellpumpe 300, so dass der Druck in der Druckleitung P konstant gehalten wird.

Wird das Ventil 200-A in die Steuerstellung b geschaltet, wird der Arbeitskreis mit der Hubleitung H über die Senkbremse 500 mit dem Rücklauf R verbunden. Durch den Restdruck in der Steuerleitung 700-2wird das entsperrbare Rückschlagventil 600 entsperrt und das hydraulische Medium aus dem einfach wirkenden Zylinder (nicht gezeigt) fließt durch den Rücklauf in das Reservoir 400. Durch die Senkbremse 500 wird ein Druck am Steuereingang des entsperrbaren Rückschlagventiles 600 aufrechterhalten, so dass das Rückschlagventil 600 entsperrt bleibt. Der Lastdruckkreis LS ist aufgrund des Rückschlagventils 203-2 in der Steuerstellung b abgesperrt und kann nicht über die Rücklaufleitung R entlastet werden. Im Falle eines Hubzylinders als hydraulischem Verbraucher, z.B. bei einem Gabelstapler, senkt sich der Kolben im Verbraucher in der Steuerstellung b.

Wird das Ventil 200-A in die Ruhestellung 0 geschaltet, wird der Lastdruckkreis LS mit der Rücklaufleitung verbunden, wodurch der Druck im Lastdruckkreis LS fällt. Dadurch wird die Verstellpumpe 300 in einen Ruhezustand versetzt.

Weiterhin ist in Fig. 3 ein 6/3-Wegeventil 200-B (bzw. in der konventionellen Bezeichnung ein 4/3 Wegeventil mit zusätzlichen Lastdruckanschlüssen) zur Ansteuerung eines doppelt wirkenden hydraulischen Zylinders (nicht gezeigt, analog zu Fig. 1 und 2) vorgesehen. Da in dem doppelt wirkenden hydraulischen Zylinder zwei Druckräume zu befüllen und zu entleeren sind, sind zwei Arbeitsleitungen A und B zum Anschluss an den doppelt wirkenden Zylinder notwendig. Der Anschluss an die Druckleitung P und die Rücklaufleitung R sowie an den Lastdruckkreis LS ist analog zum Ventil 200-A. Die Druckleitung P ist über ein Rückschlagventil 800-B mit dem Anschluss 200-B-2 des Ventils 200-B verbunden. Das Rückschlagventil 800-B öffnet in Richtung Ventil 200-B. Die Rücklaufleitung R ist mit dem Anschluss 200-B-3 verbunden. Der Anschluss 200-B-1 ist durch die Verbindungsleitung LS-1 mit dem Lastdruckkreis LS über das Ventil 200-A verbunden. Der Anschluss 200-B-6 ist mit der Rücklaufleitung R verbunden, so dass in einer Nullstellung der Ventile 200-B und 200-A der Lastdruckkreis LS über die Rücklaufleitung R entlastet werden kann. Der Anschluss 200-B-5 ist mit der Arbeitsleitung A verbunden und der Anschluss 200-B-4 ist mit der Arbeitsleitung B verbunden. Wie beim Ventil 200-A wird das Ventil 200-B durch zwei Federn 201 in einer mittigen Ruhestellung 0 gehalten.

In der Ruhestellung 0 sind die Anschlüsse 200-B-2, 200-B-3, 200-B-4 und 200-B-5 gesperrt. Die Anschlüsse 200-B-1 und 200-B-6 sind miteinander verbunden und erlauben so den Durchgang zur Rücklaufleitung R.

Durch Betätigung des Ventils 200-B (manuell, elektrisch oder pneumatisch) in eine erste Arbeitsstellung a wird eine Verbindung zwischen der Druckleitung P und der Arbeitsleitung B sowie eine Verbindung zwischen der Rücklaufleitung R und der Arbeitsleitung A hergestellt. Weiterhin sind in der Stellung a die Anschlüsse 200-B-1 und 200-B-6 über ein Rückschlagventil 203-3, das in Richtung Anschluss 200-B-1 öffnet, miteinander verbunden. Die mit Druck beaufschlagte Verbindung zwischen den Anschlüssen 200-B-2 und 200-B-4 weist den Druckabgriff auf und ist über die Abgriffleitung 202-2 mit dem Anschluss 200-B-1 verbunden.

In einer Stellung b des Ventils 200-B ist der Anschluss 200-B-1 mit dem Anschluss 200-B-6 über ein Rückschlagventil 203-4 verbunden, das in Richtung Anschluss 200-B-1 öffnet. Der Anschluss 200-B-2 ist mit dem Anschluss 200-B-5 verbunden und der Anschluss 200-B-3 ist mit dem Anschluss 200-B-4 verbunden. In dieser Stellung wird die Druckleitung P mit der Arbeitsleitung B verbunden und die Arbeitsleitung A ist mit der Rückleitung R verbunden. Die unter Druck stehende Verbindung zwischen den Anschlüssen 200-B-2 und 200-B-5 weist den Druckabgriff auf, der über die Abgriffleitung 202-3 mit dem Anschluss 200-B-1 verbunden ist.

In der Ruhestellung 0 gibt es wieder keine Verbindung zwischen der Druckleitung P bzw. der Rückleitung R und den Arbeitsleitungen A bzw. B. Der Lastdruckkreis LS ist in Ruhestellung 0 mit der Rückleitung R verbunden, so dass der Lastdruckkreis LS entlastet werden kann.

Wird das Ventil 200-B betätigt (manuell, elektrisch oder pneumatisch) und in Arbeitsstellung a gebracht, ist die Arbeitsleitung B mit der Druckleitung P verbunden und eine erste Druckkammer in dem doppelt wirkenden Zylinder (nicht gezeigt) füllt sich mit hydraulischem Medium aufgrund des Druckes in der Druckleitung P. Ein Kolben im doppelt wirkenden Zylinder (nicht gezeigt) fängt an, sich in eine Richtung zu bewegen. Durch die Vergrößerung des Volumens in der ersten Druckkammer im doppelt wirkenden Zylinder verringert sich der Arbeitsdruck in der Druckleitung P. Dieser Druck wird über die Druckabgriffleitung 202-2 in dem Ventil 200-B in den Lastdruckkreis LS-1 übertragen. Da die Rückschlagventile 203-1 bzw. 203-2 in dem Ventil 200-A in Durchlassrichtung geschaltet sind, überträgt sich die Druckänderung in der Arbeitsleitung B auf den Lastdruckkreis LS genau dann, wenn der Druck in der Arbeitsleitung B größer ist als der Druck in der Arbeitsleitung H für den einfach wirkenden Zylinder. Dieser Druck wird auf den Steuereingang der Verstellpumpe 300 übertragen. Die Regeleinrichtung in der Verstellpumpe 300 erhöht dann die Pumpleistung, um den Druck in der Druckleitung P konstant zu halten. Da sich gleichzeitig im doppelt wirkenden Zylinder (nicht gezeigt) das Volumen einer zweiten Druckkammer verkleinert, wenn sich das Volumen der ersten Druckkammer vergrößert, kann das hydraulische Medium in der zweiten Druckkammer in der Stellung a des Ventils 200-B über die Arbeitsleitung A in die Rücklaufleitung R abfließen.

Wird das Ventil 200-B in die Steuerstellung b gebracht, sind im Prinzip nur die Arbeitsleitungen A und B vertauscht. Das heißt, der Kolben des zweiseitig wirkenden Zylinders (nicht gezeigt) bewegt sich in entgegengesetzte Richtung wie in der Steuerstellung a. In diesem Fall wird der Druck auf der Arbeitsleitung A an den Lastdruckkreis weitergereicht.

Obwohl die Fig. 3 beispielhaft nur zwei Mehrwege-Mehrstellungs-Schieberventile mit internem Lastdruckabgriff 202-1, 202-2 und 202-3 zeigt, lässt sich die Anzahl der Verbraucher beliebig erweitern. Auch die gezeigten Elemente 500, 600, 700 und 800 veranschaulichen nur ein Anwendungsbeispiel in einem hydraulischen System und können modifiziert oder weggelassen werden entsprechend den speziellen Anforderungen.

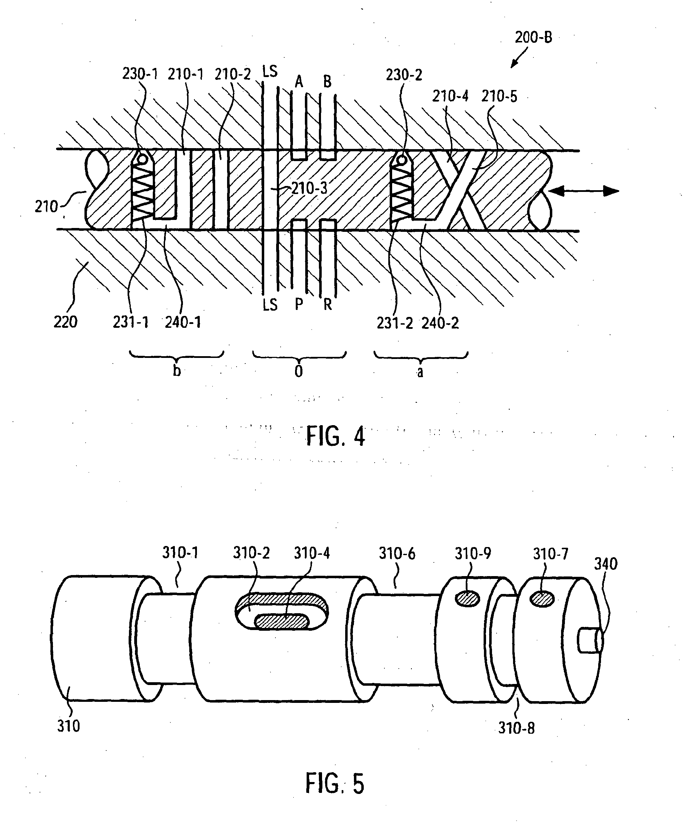

Die Mehrwege-Mehrstellungs-Schieberventile 200-A und 200-B können auf unterschiedliche Weise realisiert werden, z.B. durch Schieberventile mit einem gleitenden Element als Schaltelement, das sich axial, drehend oder in einer Kombination daraus bewegt wird. Beispielhaft wird in Fig. 4 ein Querschnitt eines 6/3-Wegekolbenschieberventils (bzw. in der konventionellen Bezeichnung ein 4/3 Wegeventil mit zusätzlichen Lastdruckanschlüssen) gezeigt.

In Fig. 4 bezeichnet die Nummer 210 einen beweglichen Kolben, der in einer Bohrung eines Ventilkörpers 220 bewegbar ist. Der Ventilkörper 220 weist sechs Anschlüsse auf, die mit der Druckleitung P, Rückleitung R, Arbeitsleitung A, Arbeitsleitung B, Lastdruckkreiszulauf LS-1 und Lastdruckkreisablauf LS verbunden sind. In den drei möglichen Stellungen a, 0 und b des Ventils 200-B werden unterschiedliche Verbindungen zwischen den Anschlüssen LS, LS-1, P, R, A und B hergestellt.

In Stellung 0 sind nur die beiden Anschlüsse für den Lastdruckkreis LS und LS-1 durch den Kanal 210-3 miteinander verbunden und die Anschlüsse P, R, A und B sind gesperrt.

In der Stellung b gibt es einen Durchgang 210-2 für die Anschlüsse R und B, sowie einen Durchgang 210-1 für die Anschlüsse P und A. Die Verbindung zwischen dem Lastdruckkreiszulauf LS-1 und Lastdruckkreisablauf LS kann als Durchgang mit einer konischen Verjüngung des Durchgangsquerschnittes zur Lastdruckkreiszulaufseite LS-1 realisiert sein. Eine Kugel 230-1, die von einer Feder 231-1 im konisch zulaufenden Teil des Durchgangs gehalten wird, bewirkt eine Rückschlagventilcharakteristik des Durchgangs. Es sind jedoch andere Bauarten von Rückschlagventilen wie z. B. Tellersitzventile, möglich. Auch eine modulare Bauweise mit Einsetzventilen ist möglich.

Die Durchgänge können als Einstiche in dem Kolben 210 realisiert werden oder auch als Kanäle entlang der Außenseite des Kolbens 210 realisiert werden. Eine Querverbindung 240-1 zwischen dem Kanal 210-1 und dem rückschlaggeschützten Durchgang für den Lastdruckkreis LS, der als Längskanal in einer axialen Richtung des Kolbens 210 auf der Außenseite des Kolbens 210 realisiert sein kann, überträgt den Druck in der Arbeitsleitung A auf den Lastdruckkreis LS. Der Querschnitt des Kanals 240-1 sollte bedeutend kleiner sein als der Querschnitt des Kanals 210-1, um eine Drosselwirkung zu erzielen, so dass der Arbeitskreis nicht über den Druckabgriff 240-1 leerlaufen kann.

Die Stellung a des Ventils 200-B unterscheidet sich von der Stellung b dadurch, dass der Druckanschluss P mit der Arbeitsleitung B über den Kanal 210-5 verbunden ist. Der Rücklaufanschluss R ist mit der Arbeitsleitung A über den Kanal 210-4 verbunden. Die Rückschlagventilcharakteristik der Verbindung zwischen dem Lastdruckkreiszulauf LS-1 und Lastdruckkreisablauf LS mit einer Kugel 230-2 und einer Feder 231-2 kann genauso ausgebildet und variiert werden wie in der Stellung b. Ebenso kann ein Druckabgriff über einen Kanal 240-2 gebildet werden.

Obwohl das Beispiel in Fig. 4 ein Mehrwege-Mehrstellungs-Schieberventil mit einem axial beweglichen Kolben als Schiebereinrichtung beispielhaft darstellt, sind dieselben Funktionen realisierbar, wenn der Kolben nicht axial bewegbar ist, sondern rotiert wird, oder wenn eine Kombination aus beidem zur Herstellung von Verbindungen zwischen den Anschlüssen verwendet wird. Ebenso ist eine Realisierung der Schiebereinrichtung in einer scheibenförmigen Anordnung möglich.

Eine alternative Ausführungsform des Kolbens 210 aus der Fig. 4 wird in Fig. 5 in perspektivischer Darstellung gezeigt. Der Kolben 310 der Fig. 5 ist ein zylindrischer Körper mit Bereichen verringerten Querschnitts 310-1, 310-6 und 310-8, sowie taschenförmigen Bereichen 310-2 und durchgehenden Einstichen (radialen Bohrungen) 310-4, 310-7 und 310-9, die den Kolben 310 senkrecht zu einer Längsachse des zylindrischen Körpers in radialer Richtung des Kolbens durchstechen. Fig. 5 zeigt auch einen Verschluss 340, der eine axiale Bohrung (nicht sichtbar) in dem Kolben 310 verschließt. Die Bereiche mit geringerem Querschnitt 310-1, 310-6 und 310-8 sind als umlaufende Nut (umlaufende Einstiche) ausgebildet und können zum Beispiel durch Abdrehen des zylinderförmigen Körpers 310 gebildet werden. Die Taschen 310-2 können ebenfalls zum Beispiel durch Ausfräsen erzeugt werden. Mit den Bearbeitungstechniken Drehen, Fräsen und Bohren können Standardkolben auch im Nachhinein bearbeitet werden, um Standardventile gemäß der vorliegenden Erfindung zu modifizieren. Der Kolben kann jedoch auch durch ein Gießverfahren auf einfachere Weise in einem Stück hergestellt werden.

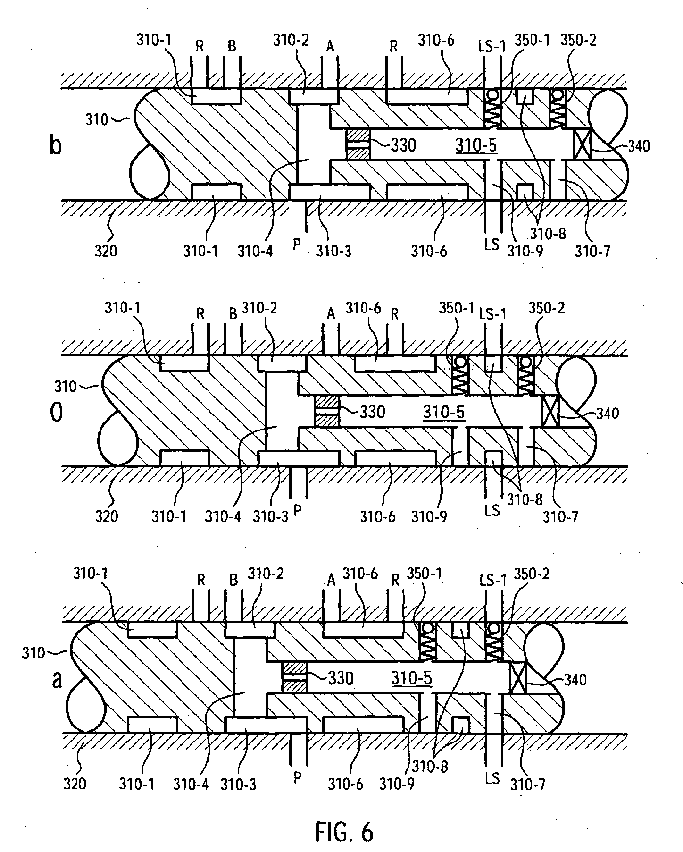

Fig. 6 zeigt einen Querschnitt durch ein 4/3-Wegeventile mit zusätzlichen Lastdruckanschlüssen LS-1 und LS, in dem der Kolben von Fig. 5 verwendet wird. Fig. 6 zeigt drei verschiedene Zustände des 4/3-Wegeventils entsprechend den drei Schaltstellungen a, b und 0. Das Ventil weist ein Ventilgehäuse 320 auf, in dem sich der Kolben 310 so bewegen kann, dass Verbindungen zwischen den vier Anschlüssen A, B, P und R, sowie den Lastdruckanschlüssen LS-1 und LS hergestellt und getrennt werden können. In Schaltstellung b sind die Anschlüsse R und B durch den umlaufenden Einstich 310-1 im Kolben 310 miteinander verbunden. Weiterhin sind die Anschlüsse A und P über die Taschen 310-2 und 310-3 sowie der Bohrung 310-4 miteinander verbunden. Der Lastdruck wird von dem Arbeitskreis PA über die Bohrung 310-5 auf den Lastdruckströmungsweg 310-9 übertragen. Ein Rückschlagventil 350-1 verhindert, dass der Lastdruck auf nachgelagerte Verbraucher über die Lastdruckzulaufleitung LS-1 weitergeleitet wird. Auf der anderen Seite erlaubt das Rückschlagventil 350-1 die Weiterleitung von Lastdrücken in nachgeordneten Verbrauchern an den Lastdruckkreis LS, falls deren Arbeitsdruck größer ist als der Arbeitsdruck im Arbeitskreis PA. In der Bohrung 310-5 befindet sich eine Drossel 330, um ein Leerlaufen des Arbeitskreises PA über den Lastdruckkreis LS so zu verlangsamen, dass der Druck in dem Arbeitskreis PA aufrechterhalten werden kann. Die Bohrung 310-5 ist durch den nachträglich eingebrachten Verschluß 340 versiegelt. Die Drossel 330 kann entweder als Einsatz in Bohrung 310-5 eingebracht werden, oder die Bohrung 310-5 wird so klein gewählt, das sie eine Drosselwirkung erzielt.

In einer Ruhestellung 0 sind die Anschlüsse R, B, A und P gesperrt. Der Lastdruckzulauf LS-1 und der Lastdruckablauf LS sind über den umlaufenden Einstich 310-8 miteinander verbunden. Wenn der Lastdruckzulauf LS-1 mit der Rücklaufleitung R verbunden wird, kann der Lastdruckkreis LS entlastet werden. Dadurch wird eine angeschlossene Pumpe in einen Ruhezustand versetzt, da in der Stellung 0 kein Verbraucher bedient werden muss.

In einer Stellung a ist die Arbeitsleitung B mit der Druckleitung P über die Taschen 310-2 und 310-3 sowie der Bohrung 310-4 verbunden. Die Arbeitsleitung A ist mit der Rücklaufleitung R über die umlaufende Nut 310-6 verbunden. Der Lastdruck wird wie in der Stellung b auf den Lastdruckströmungsweg 310-7 über die Bohrung 310-5 weitergeleitet. Das Rückschlagventil 350-2 im Lastdruckströmungsweg 310-7 erfüllt dieselben Funktionen wie das Rückschlagventil 350-1 in der Stellung b. Dasselbe gilt für den Verschluß 340 und die Drossel 330.

Die Ausführung des Kolbens 310 gemäß den Fig. 5 und 6 stellt eine besonders effiziente Ausführungsform dar, die sich durch einen geringeren Herstellungsaufwand auszeichnet.

Weitere Modifikationen und Variationen der vorliegenden Offenbarung werden dem Fachmann angesichts dieser Beschreibung offensichtlich. Deshalb sollte die Beschreibung als eine Veranschaulichung betrachtet werden und dient dem Fachmann nur dazu, das allgemeine Prinzip der Durchführung der vorliegenden Erfindung zu lehren, deren Umfang durch die Patentansprüche vorgegeben wird.

## Patentansprüche

1. Mehrwege-Mehrstellungs-Schieberventil (200-A, 200-B), das einen internen Lastruckabgriff (202-1, 202-3, 202-4, 240-1, 240-2, 310-5) aufweist, der den Lastdruck von einem Arbeitsströmungsweg abgreift, wobei der Lastdruckabgriff (202-1, 202-3, 202-4, 240-1, 240-2, 310-5) in einer Schiebereinrichtung (210, 310) des Mehrwege-Mehrstellungs-Schieberventils (200-A, 200-B) integriert und mit einem Lastdruckkreis (LS) verbindbar ist,
das Gehäuse (220, 320) des Mehrwege-Mehrstellungs-Schieberventils (200-A, 200-B), in dem die Schiebereinrichtung (210, 310) beweglich untergebracht ist, jeweils einen einzelnen ersten Strömungsweg für einen Lastdruckkreiszulauf (LS-1) und einen einzelnen zweiten Strömungsweg für einen Lastdruckkreisablauf (LS) aufweist, die für jede Stellung des Mehrwege-Mehrstellungs-Schieberventils (200-A, 200-B) verwendet werden können;
**dadurch gekennzeichnet, dass**
die Schiebereinrichtung (210, 310) in einer Nullstellung (0) den einzeinen Strömungsweg für den Lastdruckkreiszulauf (LS-1) im Gehäuse und den einzelnen Strömungsweg für den Lastdruckkreisablauf (LS) im Gehäuse miteinander verbindet, wodurch der Lastdruckkreis entlastet werden kann und Druckmittel vom einzelnen Strömungsweg für den Lastdruckkreiszulauf (LS-1) zum einzelnen Strömungsweg für den Lastdruckkreisablauf (LS) und umgekehrt fließen kann.

2. Mehrwege-Mehrstellungs-Schieberventil (200-A, 200-B) nach Anspruch 1, wobei die Schiebereinrichtung (210, 310) in einer ersten Stellung (a) den einzelnen Strömungsweg für den Lastdruckkreiszulauf (LS-1) im Gehäuse und den einzelnen Strömungsweg für den Lastdruckkreisablauf (LS) im Gehäuse über ein Rückschlagventil (203-1, 203-2, 203-3, 203-4, 350-1, 350-2) miteinander verbindet, wobei die Schiebereinrichtung (210, 310) den Lastdruckabgriff (202-1, 202-3, 202-4, 240-1, 240-2, 310-5) aufweist, um einen Lastdruck von einem Arbeits-strömungsweg (210-1, 210-5, 310-4) abzugreifen, und wobei das Rückschlagventil (203-1, 203-2, 203-3, 203-4, 350-1, 350-2) in Richtung des Lastdruckkreiszulaufes (LS-1) sperrt.

3. Mehrwege-Mehrstellungs-Schieberventil (200-A, 200-B) nach einem der Ansprüche 1 - 2, worin das Mehrwege-Mehrstellungs-Schieberventil (200-A, 200-B) ein Kolbenventil mit einem Kolben (210) als Steuerelement ist, der längsbetätigt wird, wobei der Lastdruckabgriff (202-1, 202-3, 202-4, 240-1, 240-2, 310-5) in dem Kolben (210, 310) als Längskanal (240-1, 240-2, 310-5) in dem Kolben (210, 310) ausgebildet ist.

4. Mehrwege-Mehrstellungs-Schieberventil (200-A, 200-B) nach Anspruch 3, worin der Längskanal (240-1, 240-2, 310-5) im Inneren des Kolbens (210, 310), in etwa axial, zwischen einem quer über oder durch den Kolben (210, 310) verlaufenden Arbeitsströmungsweg (210-1, 210-5, 310-4) und einem quer über oder durch den Kolben verlaufenden Lastdruckströmungsweg (310-7, 310-8, 310-9) verläuft, vorzugsweise als vom Kolben-Ende eingebrachte, den Arbeitsströmungsweg (310-4) und den Lastdruckströmungsweg (310-7, 310-8, 310-9) schneidende und mit einem Verschluss (340) verschlossene Bohrung (310-5).

5. Mehrwege-Mehrstellungs-Schieberventil (200-A, 200-B) nach Anspruch 3 oder 4, mit einer in den Längskanal (240-1, 240-2, 310-5) eingesetzten Drossel (330).

6. Mehrwege-Mehrstellungs-Schieberventil (200-A) nach einem der Ansprüche 1 - 5, worin das Mehrwege-Mehrstellungs-Schieberventil (200-A) drei Stellungen (a, 0, b) und einen ersten Fluidanschluss (200-A-1), einen zweiten Fluidanschluss (200-A-2), einen dritten Fluidanschluss (200-A-3), einen vierten Fluidanschluss (200-A-4) und einen fünften Fluidanschluss (200-A-5) aufweist.

7. Mehrwege-Mehrstellungs-Schieberventil nach Anspruch 6, worin
(i) in einer Nullstellung (0) des Ventils der zweite, dritte und vierte Anschuss (200-A-2, 200-A-3, 200-A-4) gesperrt ist, und der erste und fünfte Anschluss (200-A-1, 200-A-5) über einen ersten Strömungsweg im Kolben fluidisch verbunden sind, wodurch der Lastdruckkreis (LS) entlastet werden kann,
(ii) in einer ersten Steuerstellung (a) des Ventils der dritte Anschuss (200-A-3) gesperrt ist, der zweite und vierte Anschuss (200-A-2, 200-A-4) über einen zweiten Strömungsweg im Kolben fluidisch verbunden sind, wobei der zweite Strömungsweg im Kolben den Lastdruckabgriff (202-1) aufweist, der erste und fünfte Anschluss (200-A-1, 200-A-5) über ein erstes Rückschlagventil (203-1) fluidisch so verbunden sind, dass das erste Rückschlagventil (203-1) in Richtung zum fünften Anschlusses (200-A-5) sperrt, wobei der Lastdruckabgriff (202-1) den Lastdruck an den ersten Anschluss (200-A-1) weiterleitet; und
(iii) in einer zweiten Steuerstellung (b) des Ventils der zweite Anschluss (200-A-2) gesperrt ist, der dritte und vierte Anschluss (200-A-3, 200-A-4) über einen dritten Strömungsweg fluidisch verbunden sind, und der erste und fünfte Anschluss (200-A-1, 200-A-5) über ein zweites Rückschlagventil (203-2) fluidisch so verbunden sind, dass das zweite Rückschlagventil (203-2) in Richtung zum fünften Anschlusses (200-A-5) sperrt.

8. Mehrwege-Mehrstellungs-Schieberventil (200-B) nach einem der Ansprüche 1 - 5, worin das Mehrwege-Mehrstellungs-Schieberventil (200-B) drei Stellungen (a, 0, b) und einen ersten Fluidanschluss (200-B-1), einen zweiten Fluidanschluss (200-B-2), einen dritten Fluidanschluss (200-B-3), einen vierten Fluidanschluss (200-B-4), einen fünften Fluidanschluss (200-B-5) und einen sechsten Fluidanschluss (200-B-6) aufweist.

9. Mehrwege-Mehrstellungs-Schieberventil (200-B) nach Anspruch 8, worin
(i) in einer Nullstellung (0) des Ventils der zweite, dritte, vierte und fünfte Anschluss (200-B-2, 200-B-3, 200-B-4, 200-B-5) gesperrt ist, und der erste und sechste Anschluss (200-B-1, 200-B-6) über einen ersten Strömungsweg (210-3, 310-8) im Kolben (210, 310) fluidisch verbunden sind, wodurch der Lastdruckkreis (LS) entlastet werden kann,
(ii) in einer ersten Steuerstellung (a) des Ventils der dritte und fünfte Anschluss (200-B-3, 200-B-5) über einen zweiten Strömungsweg (210-4, 310-6) im Kolben (210, 310) fluidisch verbunden sind, der zweite und vierte Anschuss (200-B-2, 200-B-4) über einen dritten Strömungsweg (210-5, 310-4) im Kolben (210, 310) fluidisch verbunden sind, wobei der dritte Strömungsweg (210-5, 310-4) im Kolben (210, 310) den Lastdruckabgriff (202-3, 240-2, 310-5) aufweist, der erste und sechste Anschluss (200-B-1, 200-B-6) über ein erstes Rückschlagventil (203-3) fluidisch so verbunden sind, dass das Rückschlagventil (203-3) in Richtung zum sechsten Anschlusses (200-B-6) sperrt, wobei der Lastdruckabgriff (202-3, 240-2, 310-5) den Lastdruck an den ersten Anschluss (200-B-1) weiterleitet; und
(iii) in einer zweiten Steuerstellung (b) des Ventils der dritte und vierte Anschluss (200-B-3, 200-B-4) über einen vierten Strömungsweg (210-2, 310-1) im Kolben (210, 310) fluidisch verbunden sind, der zweite und fünfte Anschuss (200-B-2, 200-B-5) über einen fünften Strömungsweg (210-1, 310-4) im Kolben (210, 310) fluidisch verbunden sind, wobei der fünfte Strömungsweg (210-1, 310-4) im Kolben (210, 310) den Lastdruckabgriff (202-4, 240-1, 310-5) aufweist, der erste und sechste Anschluss (200-B-1, 200-B-6) über ein zweites Rückschlagventil (203-4) fluidisch so verbunden sind, dass das zweite Rückschlagventil (203-4) in Richtung zum sechsten Anschlusses (200-B-6) sperrt, wobei der Lastdruckabgriff (202-4, 240-1, 310-5) den Lastruck an den ersten Anschluss (200-B-1) weiterleitet.

## Claims

1. Multi-way multi-position directional control spool valve (200-A, 200-B), comprising an internal load pressure sensing means (202-1, 202-3, 202-4, 240-1, 240-2. 310-5) for sensing the load pressure of a working flow path, wherein the load pressure sensing means (202-1, 202-3, 202-4, 240-1. 240-2. 310-5) is integrated into a spool assembly (210, 310) of the multi-way multi-position directional control spool valve (200-A, 200-B) and can be connected with a load pressure circuit (LS),
wherein the housing (220, 320) of the multi-way multi-position directional control spool valve (200-A, 200-B), within which the spool assembly (210, 310) is accommodated moveably, comprises respectively a single first flow path for a load pressure circuit inlet (LS-1) and a single second flow path for a load pressure circuit outlet (LS) which can be used for any position of the multi-way multi-position directional control spool valve (200-A, 200-B);
**characterised in that**
in a zero position (0) the spool assembly (210, 310) connects the single flow path for the load pressure circuit inlet (LS-1) in the housing and the single flow path for the load pressure circuit outlet (LS) in the housing with each other for relieving the load pressure circuit and allowing that pressure medium can flow from the single flow path for the load pressure circuit inlet (LS-1) to the single flow path for the load pressure circuit outlet (LS) and vice versa.

2. Multi-way multi-position directional control spool valve (200-A, 200-B) according to claim 1, wherein in a first position (a) the spool assembly (210, 310) connects the single flow path for the load pressure circuit inlet (LS-1) in the housing and the single flow path for the load pressure circuit outlet (LS) in the housing via a check valve (203-1, 203-2, 203-3, 203-4, 350-1, 350-2) with each other, wherein the spool assembly (210, 310) comprises the load pressure sensing means (202-1, 202-3, 202-4, 240-1, 2490-2, 310-5) in order to sense a load pressure from a working flow path (210-1, 210-5, 310-4), and wherein the check valve (203-1, 203-2, 203-3, 203-4, 350-1, 350-2) is blocking in the direction of the load pressure circuit inlet (LS-1).

3. Multi-way multi-position directional control spool valve (200-A, 200-B) according to one of claims 1 to 2, wherein the multi-way multi-position directional control spool valve (220-A, 200-B) is a piston valve having a piston (210) as a control element, which piston is actuated longitudinally, wherein the load pressure sensing means (202-1, 202-3, 202-4, 240-1, 2490-2, 310-5) is formed as a longitudinal channel (240-1, 240-2, 310-5) in the piston (210, 310).

4. Multi-way multi-position directional control spool valve (200-A, 200-B) according to claim 3, wherein the longitudinal channel (240-1, 240-2, 310-5) extends in the interior of the piston (210, 310) substantially axially between a working flow path (210-1, 210-5, 310-4) extending either crosswise over or through the piston (210, 310) and a load pressure flow path (310-7, 310-8, 310-9) extending either crosswise over or through the piston, preferably in the form of a bore (310-5) beginning at a piston end and intersecting the working flow path (310-4) and the load pressure flow path (310-7, 310-8, 310-9) and being closed by a closure element (340).

5. Multi-way multi-position directional control spool valve (200-A, 200-B) according to claim 3 or 4, comprising an aperture (330) inserted into the longitudinal channel (240-1, 240-2, 310-5).

6. Multi-way multi-position directional control spool valve (200-A) according to any one of claims 1 to 5, wherein the multi-way multi-position directional control spool valve (200-A) comprises three positions (a, 0, b) and a first fluid port (200-A-1), a second fluid port (200-A-2), a third fluid port (200-A-3), a fourth fluid port (200-A-4) and a fifth fluid port (200-A-5).

7. Multi-way multi-position directional control spool valve according to claim 6, wherein
(i) in a zero position (0) of the valve the second, third and fourth port (200-A-2, 200-A-3, 200-A-4) are blocked, and the first and fifth port (200-A-1, 200-A-5) are fluidly connected via a first flow path in the piston for relieving the load pressure circuit (LS),
(ii) in a first control position (a) of the valve the third port (200-A-3) is blocked, the second and fourth ports (200-A-2, 200-A-4) are fluidly connected via a second flow path in the piston, wherein the second flow path in the piston comprises the load pressure sensing means (202-1), the first and fifth ports (200-A-1, 200-A-5) are fluidly connected via a first check valve (203-1) such that the first check valve (203-1) blocks in the direction towards the fifth port (200-A-5), wherein the load pressure sensing means (202-1) directs the load pressure to the first port (200-A-1); and
(iii) in a second control position (b) of the valve the second port (200-A-2) is blocked, the third and fourth ports (200-A-3, 200-A-4) are connected fluidly via a third flow path, and the first and fifth ports (200-A-1, 200-A-5) are connected fluidly via a second check valve (203-2) which second check valve (203-2) blocks in the direction towards the fifth port (200-A-5).

8. Multi-way multi-position directional control spool valve (200-B) according to one of claims 1 to 5, wherein the multi-way multi-position directional control spool valve (200-B) comprises three positions (a, 0, b) and a first fluid port (200-B-1), a second fluid port (200-B-2), a third fluid port (200-B-3), a fourth fluid port (200-B-4), a fifth fluid port (200-B-5) and a sixth fluid port (200-B-6).

9. Multi-way multi-position directional control spool valve (200-B) according to claim 8, wherein
(i) in a zero position (0) of the valve a second, third, fourth and fifth ports (200-B-2, 200-B-3, 200-B-4, 200B-5) are blocked, and the first and sixth ports (200-B-1, 200-B-6) for relieving the load pressure circuit (LS) are connected fluidly via a first flow path (210-, 310-8) in the piston (210, 310),
(ii) in a first control position (a) of the valve the third and fifth ports (200-B-3, 200-B-5) are fluidly connected via a second flow path (210-4, 310-6) in the piston (210, 310), the second and fourth ports (200-B-2, 200-B-4) are fluidly connected via a third flow path (210-5, 310-4) in the piston (210, 310), wherein the third flow path (210-5, 310-4) in the piston (210, 310) comprises the load pressure sensing means (210-3, 240-2, 310-5), the first and sixth ports (200-B-1, 200-B-6) are fluidly connected via a first check valve (203-3) which blocks in the direction towards the sixth port (200-B-6), wherein the load pressure sensing means (202-3, 240-2, 310-5) directs the load pressure to the first port (200-B-1); and
(iii) in a second control position (b) of the valve the third and fourth ports (200-B-3, 200-B-4) are fluidly connected via a fourth flow path (210-2, 310-1) in the piston (210, 310), the second and fifth ports (200-B-2, 200-B-5) are fluidly connected via a fifth flow path (210-1, 310-4) in the piston (210, 310), wherein the fifth flow path (210-1, 310-4) in the piston (210, 310) comprises the load pressure sensing means (210-4, 240-1, 310-5), the first and sixth ports (200-B-1, 200-B-6) are fluidly connected via a second check valve (203-4) which blocks in the direction towards the sixth port (200-B-6), wherein the load pressure sensing means (202-4, 240-1, 310-5) directs the load pressure to the first port (200-B-1).

## Revendications

1. Vanne à tiroir multivoie et multiposition (200-A, 200-B) comportant une sortie de pression de service interne (202-1, 202-3, 202-4, 240-1, 240-2, 310-5) qui prélève la pression de service d'une voie de flux de service, dans laquelle la sortie de pression de service (202-1, 202-3, 202-4, 240-1, 240-2, 310-5) est intégrée dans un dispositif à tiroir (210, 310) de la vanne à tiroir multivoie et multiposition (200-A, 200-B) et peut être connectée à un circuit de pression de service (LS),
le boîtier (220, 320) de la vanne à tiroir multivoie et multiposition (200-A, 200-B), qui est agencé de façon mobile dans le dispositif à tiroir (210, 310), comporte respectivement une première voie d'écoulement individuelle pour une entrée de circuit de pression de service (LS-1) et une deuxième voie d'écoulement individuelle pour une sortie de circuit de pression de service (LS) qui peuvent être utilisées pour chaque position de la vanne à tiroir multivoie et multiposition (200-A, 200-B) ;
**caractérisée**
**en ce que** le dispositif à tiroir (210, 310), dans une position nulle (0), connecte entre elles la voie d'écoulement individuelle pour l'entrée de circuit de pression de service (LS-1) dans le boîtier et la voie d'écoulement individuelle pour la sortie de circuit de pression de service (LS) dans le boîtier, moyennant quoi le circuit de pression de service peut être déchargé et le moyen de pression peut s'écouler depuis la voie d'écoulement individuelle pour l'entrée de circuit de pression de service (LS-1) vers la voie d'écoulement individuelle pour la sortie de circuit de pression de service (LS) et inversement.

2. Vanne à tiroir multivoie et multiposition (200-A, 200-B) selon la revendication 1, dans laquelle le dispositif à tiroir (210, 310) dans une première position (a) connecte entre elles la voie d'écoulement individuelle pour l'entrée de circuit de pression de service (LS-1) dans le boîtier et la voie d'écoulement individuelle pour la sortie de circuit de pression de service (LS) dans le boîtier via un clapet anti-retour (203-1, 203-2, 203-3, 203-4, 350-1, 350-2), dans laquelle le dispositif à tiroir (210, 310) comporte la sortie de pression de service (202-1, 202-3, 202-4, 240-1, 240-2, 310-5) pour dériver une pression de service d'une voie de flux de service (210-1, 210-5, 310-4), et dans laquelle le clapet anti-retour (203-1, 203-2, 203-3, 203-4, 350-1, 350-2) bloque l'écoulement en direction de l'entrée de circuit de pression de service (LS-1).

3. Vanne à tiroir multivoie et multiposition (200-A, 200-B) selon l'une des revendications 1 et 2, dans laquelle la vanne à tiroir multivoie et multiposition (200-A, 200-B) est une vanne à piston avec un piston (210) fonctionnant comme élément de contrôle qui est actionné dans le sens de la longueur, dans laquelle la sortie de pression de service (202-1, 202-3, 202-4, 240-1, 240-2, 310-5) est constituée dans le piston (210, 310) sous forme d'un canal longitudinal (240-1, 240-2, 310-5) dans le piston (210, 310).

4. Vanne à tiroir multivoie et multiposition (200-A, 200-B) selon la revendication 3, dans laquelle le canal longitudinal (240-1, 240-2, 310-5) s'étend sensiblement axialement à l'intérieur du piston (210, 310) entre une voie de flux de service (210-1, 210-5, 310-4) qui s'étend transversalement par rapport au piston (210, 310) ou traverse celui-ci, et une voie de flux de pression de service (310-7, 310-8, 310-9) qui s'étend transversalement par rapport au piston ou traverse celui-ci, préférablement sous forme d'un perçage (310-5) réalisé à partir de l'extrémité du piston, intersectant la voie de flux de service (310-4) et la voie de flux de pression de service (310-7, 310-8, 310-9) et fermé par un bouchon (340).

5. Vanne à tiroir multivoie et multiposition (200-A, 200-B) selon la revendication 3 ou 4, comportant une vanne de régulation de débit (330) dans le canal longitudinal (240-1, 240-2, 310-5).

6. Vanne à tiroir multivoie et multiposition (200-A) selon l'une des revendications 1 à 5, dans laquelle la vanne à tiroir multivoie et multiposition (200-A) comporte trois positions (a, 0, b) ainsi qu'une première connexion de fluide (200-A-1), une deuxième connexion de fluide (200-A-2), une troisième connexion de fluide (200-A-3), une quatrième connexion de fluide (200-A-4) et une cinquième connexion de fluide (200-A-5).

7. Vanne à tiroir multivoie et multiposition selon la revendication 6, dans laquelle
(i) dans une position nulle (0) de la vanne, les deuxième, troisième et quatrième connexions (200-A-2, 200-A-3, 200-A-4) sont fermées, et les première et cinquième connexions (200-A-1, 200-A-5) sont connectées de manière à permettre une circulation de fluide via une première voie d'écoulement dans le piston, moyennant quoi le circuit de pression de service (LS) peut être déchargé,
(ii) dans une première position de contrôle (a), la vanne de la troisième connexion (200-A-3) est fermée, les deuxième et quatrième connexions (200-A-2, 200-A-4) sont connectées de manière à permettre une circulation de fluide via une deuxième voie d'écoulement dans le piston, dans laquelle la deuxième voie d'écoulement dans le piston comporte la sortie de pression de service (202-1), les première et cinquième connexions (200-A-1, 200-A-5) sont connectées de manière à permettre une circulation de fluide via un premier clapet anti-retour (203-1) de telle sorte que le premier clapet anti-retour (203-1) est fermé en direction de la cinquième connexion (200-A-5), dans laquelle la sortie de pression de service (202-1) transmet la pression de service à la première connexion (200-A-1) ; et
(iii) dans une deuxième position de contrôle (b) de la vanne, la deuxième connexion (200-A-2) est fermée, les troisième et quatrième connexions (200-A-3, 200-A-4) sont connectées de manière à permettre une circulation de fluide via une troisième voie d'écoulement, et les première et cinquième connexions (200-A-1, 200-A-5) sont connectées de manière à permettre une circulation de fluide via un deuxième clapet anti-retour (203-2) de telle sorte que le deuxième clapet anti-retour (203-2) est fermé en direction de la cinquième connexion (200-A-5).

8. Vanne à tiroir multivoie et multiposition (200-B) selon l'une des revendications 1 à 5, dans laquelle la vanne à tiroir multivoie et multiposition (200-B) comporte trois positions (a, 0, b) et une première connexion de fluide (200-B-1), une deuxième connexion de fluide (200-B-2), une troisième connexion de fluide (200-B-3), une quatrième connexion de fluide (200-B-4), une cinquième connexion de fluide (200-B-5) et une sixième connexion de fluide (200-B-6).

9. Vanne à tiroir multivoie et multiposition (200-B) selon la revendication 8, dans laquelle
(i) dans une position nulle (0) de la vanne, les deuxième, troisième, quatrième et cinquième connexions (200-B-2, 200-B-3, 200-B-4, 200-B-5) sont fermées, et les première et sixième connexions (200-B-1, 200-B-6) sont connectées de manière à permettre une circulation de fluide via une première voie d'écoulement (210-3, 310-8) dans le piston (210, 310), moyennant quoi le circuit de pression de service (LS) peut être déchargé,
(ii) dans une première position de contrôle (a) de la vanne, les troisième et cinquième connexions (200-B-3, 200-B-5) sont connectées de manière à permettre une circulation de fluide via une deuxième voie d'écoulement (210-4, 310-6) dans le piston (210, 310), les deuxième et quatrième connexions (200-B-2, 200-B-4) sont connectées de manière à permettre une circulation de fluide via une troisième voie d'écoulement (210-5, 310-4) dans le piston (210, 310), dans laquelle la troisième voie d'écoulement (210-5, 310-4) dans le piston (210, 310) comporte la sortie de pression de service (202-3, 240-2, 310-5), les première et sixième connexions (200-B-1, 200-B-6) sont connectées de manière à permettre une circulation de fluide via un premier clapet anti-retour (203-3), de telle sorte que le clapet anti-retour (203-3) est fermé en direction de la sixième connexion (200-B-6), dans laquelle la sortie de pression de service (202-3, 240-2, 310-5) transmet la pression de service à la première connexion (200-B-1) ; et
(iii) dans une deuxième position de contrôle (b) de la vanne, les troisième et quatrième connexions (200-B-3, 200-B-4) sont connectées de manière à permettre une circulation de fluide via une quatrième voie d'écoulement (210-2, 310-1) dans le piston (210, 310), les deuxième et cinquième connexions (200-B-2, 200-B-5) sont connectées de manière à permettre une circulation de fluide via une cinquième voie d'écoulement (210-1, 310-4) dans le piston (210, 310), dans laquelle la cinquième voie d'écoulement (210-1, 310-4) dans le piston (210, 310) comporte la sortie de pression de service (202-4, 240-1, 310-5), les première et sixième connexions (200-B-1, 200-B-6) sont connectées de manière à permettre une circulation de fluide via un deuxième clapet anti-retour (203-4), de telle sorte que le deuxième clapet anti-retour (203-4) est fermé en direction de la sixième connexion (200-B-6), dans laquelle la sortie de pression de service (202-4, 240-1, 310-5) transmet la pression de service à la première connexion (200-B-1).
